# EUROPEAN PATENT APPLICATION

(11) **EP 4 703 311 A1**
(43) Date of publication of application: **04.03.2026**
(21) Application number: 25194780.0
(22) Date of filing: 08.08.2025
(51) Int. Cl.: B66B 1/46, B66B 9/08

(54) **A LA CARTE DISABILITY FEATURES**

(30) Priority: 26.08.2024 US 202418815325
(71) Applicant: Otis Elevator Company, Farmington, Connecticut 06032 (US)
(72) Inventor: Hsu, Arthur, Farmington, 06032 (US)
(74) Representative: Schmitt-Nilson Schraud Waibel Wohlfrom Patentanwälte Partnerschaft mbB

(57) **Abstract**

A personnel movement system is provided and includes a personnel movement element to transport passengers from one location to another and a controller configured to control operations of the personnel movement element. The controller is configured to be instructed to operate in one or more special assistance modes in which, for each of the one or more special assistance modes, a customizable subset of the operations of the personnel movement element are adjusted.

## Description

The present disclosure relates to personnel movement systems and, in particular, to an elevator system, an escalator system and a moving walkway system with a la carte disability features.

In an elevator system, in particular, an elevator shaft is built into a building and an elevator car travels up and down along the elevator shaft to arrive at landing doors of different floors of the building. The movement of the elevator is driven by a machine that is controlled by a controller according to instructions received from users of the elevator system. During operational conditions, passengers will typically arrive at an elevator landing in a building, press a call button and wait for the elevator to arrive. Once the elevator arrives and its doors open, the passenger will enter the elevator and select a destination floor. The doors close and the elevator travels upwardly or downwardly to the selected floor whereupon the passenger disembarks.

For passengers with special needs, using elevators, escalator and moving walkways often presents a challenge. Blind passengers may not be able to see the elevators, the escalators and the moving walkways, their respective landings or their respective buttons. Passengers with mobility problems may not be able to enter and exit an elevator in time for the doors to open or close. Even for passengers who do not have special needs, it may be difficult to locate elevators, escalators and moving walkways in a given building, especially in cases in which only certain elevators, escalators and moving walkways service certain floors or other specified areas.

According to an aspect of the disclosure, a personnel movement system is provided and includes a personnel movement element to transport passengers from one location to another and a controller configured to control operations of the personnel movement element. The controller is configured to be instructed to operate in one or more special assistance modes in which, for each of the one or more special assistance modes, a customizable subset of the operations of the personnel movement element are adjusted.

Particular embodiments further may include at least one, or a plurality of, the following optional features, alone or in combination with each other:

In accordance with additional or alternative embodiments, the personnel movement element includes an elevator car, the elevator car is one of a bank of one or more elevators and the personnel movement system further includes one or more special assistance features which, when actuated, signal to the controller to operate in corresponding ones of the one or more special assistance modes.

In accordance with additional or alternative embodiments, the personnel movement system further includes at least one of a first additional feature where the bank of the elevators includes glass enclosed elevators and a non-transparent elevator, wherein the first additional feature, when actuated, signals to the controller to operate in a first additional special assistance mode in which only the non-transparent or only the glass enclosed elevators are dispatched and a second additional feature, which, when actuated, signals to the controller to operate in a second additional special assistance mode in which certain ones of the operations that are characterized as stimuli are toned down.

In accordance with additional or alternative embodiments, the operations of the personnel movement element include at least one or more of audio announcements at each floor serviced by the elevator car, increased-volume chimes and announcements and extended door timings.

In accordance with additional or alternative embodiments, one of the one or more special assistance features enables only the audio announcements.

In accordance with additional or alternative embodiments, one of the one or more special assistance features enables only the increased-volume chimes and announcements.

In accordance with additional or alternative embodiments, one of the one or more special assistance features enables only the extended door timings.

In accordance with additional or alternative embodiments, the controller is further configured to automatically recognize a passenger and to initiate the one or more special assistance modes automatically.

In accordance with additional or alternative embodiments, an adjustment degree of each operation of the customizable subset of the operations of the personnel movement element is configurable.

According to an aspect of the disclosure, a personnel movement system is provided and includes a personnel movement element to transport passengers from one location to another, a controller configured to control operations of the personnel movement element, a general assistance feature which, when actuated, signals to the controller to operate in a general assistance mode in which certain ones of the operations of the personnel movement element are adjusted and one or more special assistance features each of which, when actuated, signals to the controller to operate in one of one or more special assistance modes in which, for each of the one or more special assistance modes, one of a customizable subset of the certain ones of the operations of the personnel movement element are adjusted and a customizable subset of any of the operations of the personnel movement element are adjusted.

Particular embodiments further may include at least one, or a plurality of, the following optional features, alone or in combination with each other:

In accordance with additional or alternative embodiments, the personnel movement element includes an elevator car and the elevator car is one of a bank of one or more elevators.

In accordance with additional or alternative embodiments, the personnel movement system further includes at least one of a first additional feature where the bank of the elevators includes glass enclosed elevators and a non-transparent elevator, wherein the first additional feature, when actuated, signals to the controller to operate in a second special assistance mode in which only the non-transparent elevator or only the glass enclosed elevators are dispatched and a second additional feature, which, when actuated, signals to the controller to operate in a third special assistance mode in which certain ones of the operations that are characterized as stimuli are toned down.

In accordance with additional or alternative embodiments, the personnel movement element includes an elevator car and the general assistance feature simultaneously enables at least audio announcements at each floor serviced by the elevator car, increased-volume chimes and announcements and extended door timings.

In accordance with additional or alternative embodiments, one of the one or more special assistance features enables only the audio announcements.

In accordance with additional or alternative embodiments, one of the one or more special assistance features enables only the increased-volume chimes and announcements.

In accordance with additional or alternative embodiments, one of the one or more special assistance features enables only the extended door timings.

In accordance with additional or alternative embodiments, the one or more special assistance features are provided as at least two or more special assistance features of which at least two or more are coincidentally actuatable to signal to the controller to operate in at least two special assistance modes.

In accordance with additional or alternative embodiments, the controller is further configured to automatically recognize a passenger and to initiate one of the one or more special assistance modes, which is associated with and customized for the passenger, automatically and without the special assistance feature being actuated.

In accordance with additional or alternative embodiments, an adjustment degree of each operation of the customizable subset of the certain ones of the operations of the personnel movement element is configurable and an adjustable degree of each operation of the customizable subset of any of the operations of the personnel movement element are adjusted.

According to an aspect of the disclosure, an operational method of a personnel movement system is provided and includes controlling operations of a personnel movement element, receiving and responding accordingly to a signal from an actuated general assistance feature to operate in a general assistance mode in which certain operations of the personnel movement element are adjusted for passengers who are at least one of blind, deaf and mobility-challenged and receiving and responding accordingly to a signal to operate in one of one or more special assistance modes in which, for each of the one or more special assistance modes, one of a customizable subset of the certain ones of the operations of the personnel movement element are adjusted and a customizable subset of any of the operations of the personnel movement element are adjusted.

Particular embodiments further may include at least one, or a plurality of, the above optional features, alone or in combination with each other:

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2A is a schematic diagram illustrating an architecture of an elevator system control application in accordance with embodiments;
FIG. 2B is a flow diagram illustrating how parties interact with the elevator system control application of FIG. 2A in accordance with embodiments;
FIG. 3 is a graphical depiction of an instance of the elevator control application of FIGS. 2A and 2B in accordance with embodiments;
FIG. 4 is a schematic diagram of an elevator control system in accordance with embodiments;
FIG. 5 is a flow diagram illustrating a control system operational method for the elevator control system of FIG. 4 in accordance with embodiments;
FIG. 6 is a schematic diagram of a third party control system in accordance with embodiments;
FIG. 7 is a graphical display of a wayfinding application with a user interface generated therein in accordance with embodiments;
FIG. 8 is a schematic diagram of a computing system for wayfinding and elevator system control in accordance with embodiments;
FIG. 9 is a graphical illustration of an automatic wayfinding system with a robotic guide;
FIG. 10 is a graphical illustration of robotic guide that is virtually tied to a passenger in accordance with embodiments;
FIG. 11 is a graphical illustration of robotic guide that is coupled to a wheelchair of a passenger in accordance with embodiments;
FIG. 12 is a graphical illustration of robotic guide that is provided as a wheelchair of a passenger in accordance with embodiments;
FIG. 13 is a flow diagram illustrating an operational method of an automatic wayfinding system in accordance with embodiments;
FIG. 14 is a schematic illustration of a personnel movement system in accordance with embodiments; and
FIG. 15 is a flow diagram illustration an operational method of the personnel movement system of FIG. 14 in accordance with embodiments.

In many jurisdictions (e.g., in the United States where the Americans with Disabilities Act (ADA) is in effect), a special elevator call button is required. This special elevator call button modifies elevator operation to address a wide range of disabilities. That single button simultaneously enables features for blind passengers through audio announcements at each floor, deaf passengers through loud chimes and announcements and mobility-challenged passengers through extended door timings. Consequently, passengers who only have one disability (e.g., deafness) may be embarrassed to make a disability call because it brings attention to their disability and confuses and annoys other passengers due to distracting audio announcements and slower elevator door operation and when not all of these responses are needed.

Thus, as will be described below, a personnel movement system is provided in a form of an elevator system, an escalator system and a moving walkway system that complies with disability requirements (which will result in responses to all disabilities) while adding new features to replace or supplement the single button noted above to provide for a la carte feature options. These new features allow a disabled passenger to indicate, either directly (via a new call feature) or indirectly (e.g., associated with their credential), a request to address only his/her relevant disability. As an example, a mobility-challenged call will result in extended door timings but will not lead to loud voice announcements unless there are other disability calls that require those loud voice announcements. The personnel movement system includes an interface to receive calls for specific disabilities and a controller which considers all of the disability calls in effect for a given car trip and responds only to requested disability features. Additional features of the personnel movement system include, but are not limited to, allowing a specification of a severity of the disability (e.g., ADA assumes a (very slow) 1.5 feet/s walking speed but a moderately disabled passenger may request a slightly faster walking speed that does not delay the door operation as much or, for example, if one user requires a 2.5 feet/s walking speed translating to a 10 second delay since the passenger is 25 feet away, and another passenger requires a 1.0 feet/s walking speed translating to 12 seconds because the passenger is 12 feet away, the timing should allow 12 seconds to reach the elevator as the most stringent requirement) and an automatic association of the relevant disability after establishing the identity of the passenger via at least one or more of credentials, face recognition, etc., and without an explicit disability call. In addition, for people who get vertigo when standing at the edge of a drop-off, the personnel movement system can provide for a vertigo call. In these or other cases, for elevator groups with glass elevators and at least one elevator without glass, a vertigo call will be assigned a non-glass elevator. Also, where a passenger is autistic or on the autism spectrum and does not respond well to certain stimuli, the personnel movement system allows for reductions or toning down of the relevant stimuli. In these or other cases, the stimuli that can be reduced or toned down can include, but are not limited to, sounds, lighting intensity, sudden visual changes, crowding, etc.

The following description will relate to a case in which a personnel movement system is an elevator system in particular. This is being done for purposes of clarity and brevity and should not be interpreted as limiting the description or the following claims in any way. It is to be further understood that other personnel movement systems can include, but are not limited to, escalator systems and moving walkway systems, all of which would be readily apparent to persons of ordinary skill in the art without any undue experimentation. Thus, any reference in the following description should be interpreted as pertaining to an elevator system, an escalator system, a moving walkway system, another similar type of system and/or a general personnel movement system.

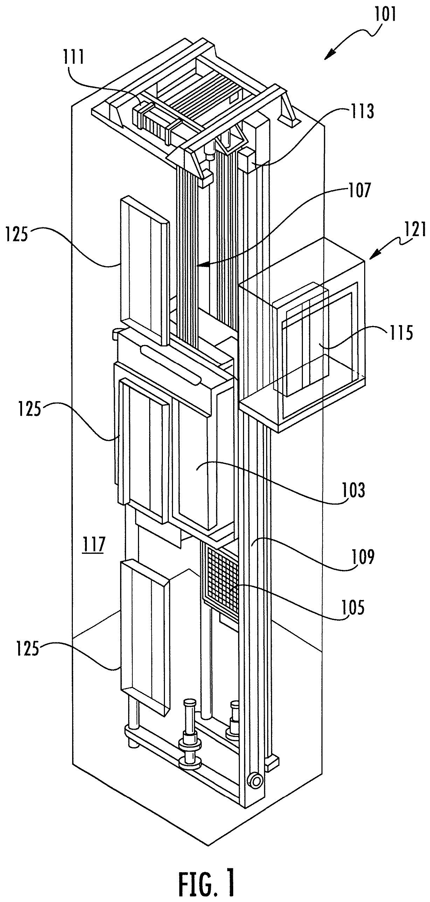

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor is a variable speed drive, which may be commonly referred to as a drive. As understood by those skilled in the art, the drive is comprised of several electrical circuits such as an inverter, rectification stage, filtering, and control circuitry towards the purpose of controlling the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars, escalator components and moving walkways equipped with friction wheels, pinch wheels or traction wheels). FIG. 1 is merely a non-limiting example presented for illustrative and explanatory purposes.

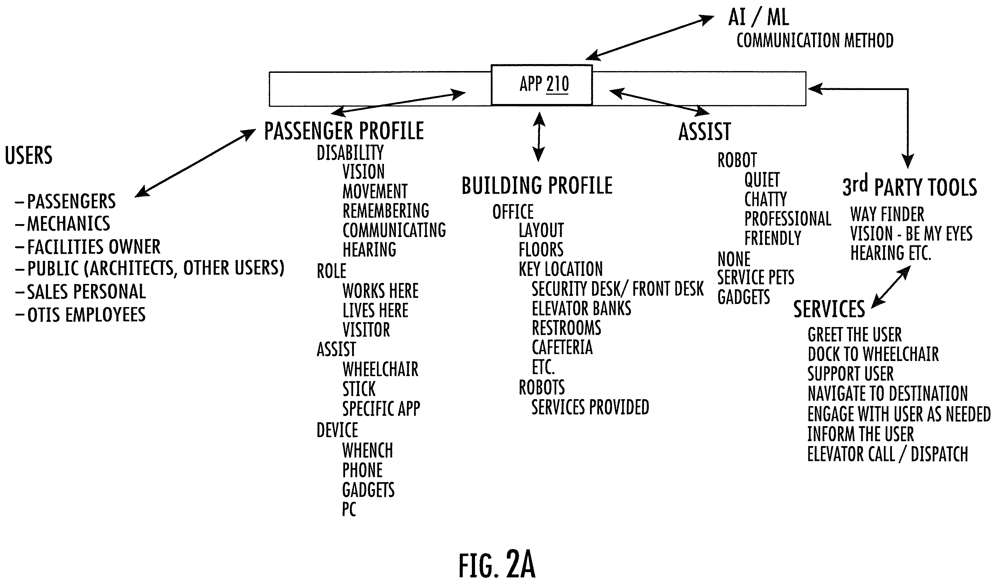

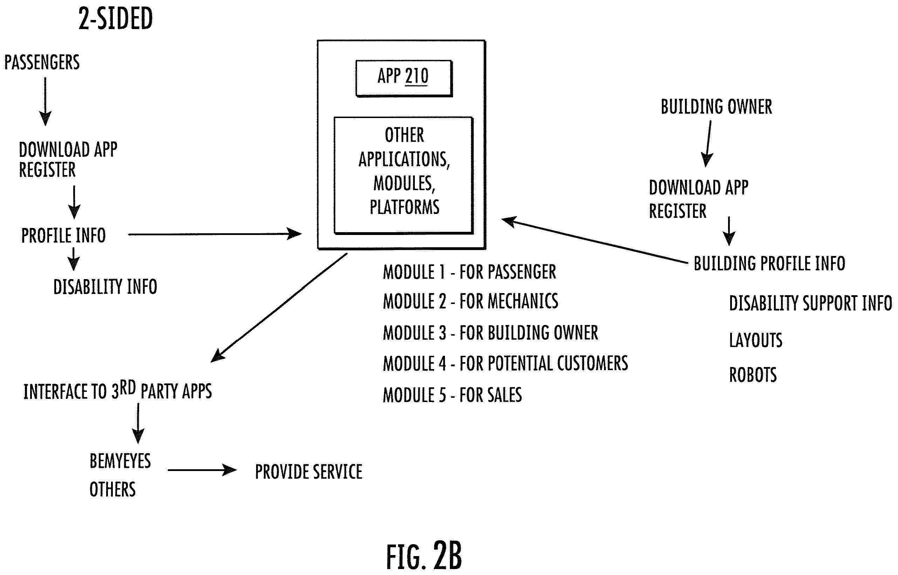

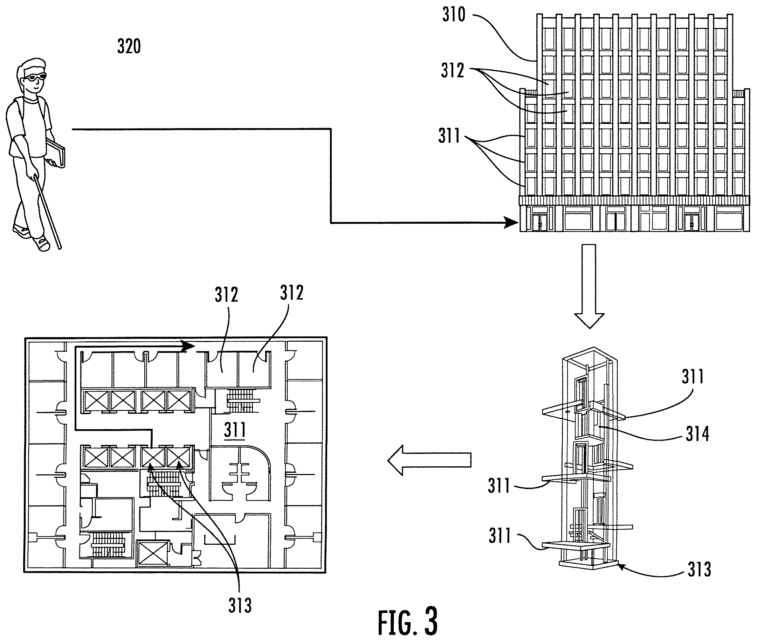

With continued reference to FIG. 1 and with additional reference to FIGS. 2A and 2B and FIG. 3, the elevator system 101 of FIG. 1 can be provided with or generally controlled through an application 201.

As shown in FIG. 2A, the application 201 includes a passenger database 210 that optionally includes information about passengers of different types, such as mechanics, facilities owners, public personnel, sales personnel, employees, building residents and guests, etc., and a passenger profile database 220 that includes optional passenger profiles for each passenger included in the passenger database 210 who has chosen to create a passenger profile. The passenger profiles for each passenger that has chosen to create a passenger profile can include at least one or more of disability information 221, role information 222, assist information 223 and device information 224. The disability information 221 describes a disability of the corresponding passenger (i.e., any disability such as, but not limited to, vision, movement, memory, communication, hearing, etc.), the role information 222 describes a role of the corresponding passenger (i.e., any function such as, but not limited to, works in the building, lives in the building, visits the building, etc.), the assist information 223 describes the corresponding passenger's assist mechanism, such as his/her wheelchair, and the device information 224 describes the corresponding passenger's portable electronic device (i.e., any device or device type such as, but not limited to, a watch, a phone, a gadget, a computer, etc.). The application 201 further includes a building profile database 230 and an assist database 240. The building profile database 230 can include a description of a building in which the elevator system 101 is deployed (i.e., office, layout, rooms, key locations including elevator banks, available robots, etc.). The assist database 240 can include a description of preferred, desired, needed or required assist devices with a variety of preferences (i.e., any assist device such as, but not limited to, a robot which can be chatty, quiet, professional and/or friendly, service pets, gadgets, etc.).

Also as shown in FIG. 2A, the application 201 can interface with a third party tool 250, such as a wayfinding application, a vision assistance application or device and a hearing assistance application or device, and can be provided with artificial intelligence (AI) and/or machine learning (ML) capabilities 260. This third party tool 250 can provide one or more service including greetings, wheelchair docking, support, navigation, information provision, elevator calling and dispatching, etc.

As shown in FIG. 2B, the application 201 can be provided as a two-sided service for users and for building owners, for example. On the passenger side 301, users download and/or use the application 201 and register, and then they enter their profile information and any disability information that may apply. On the business owner side 302, a representative of a building owner downloads and/or uses the application 201 and registers, and then provides a description of the building including disability support information, layouts, available robots, etc. Separately from the passenger side 301 and the business owner side 302, the third party tool 250 can in certain cases have access to user information and building information so that the third party tool 250 can provide the corresponding service.

With the architecture described above, the application 201 can define an operational module 1 for passengers, an operational module 2 for mechanics, an operational module 3 for building owners, an operational module 4 for potential customers, an operational module 5 for sales personnel, etc.

As shown in FIG. 3, in an exemplary instance, the elevator system 101 of FIG. 1 can be deployed in an office building 310 with multiple floors 311 and multiple offices 312 on each floor 311, the office building 310 can be owned by an owner who is a registered user of the application 201 and a passenger 320 can be blind and can also be a registered user of the application 201. Upon registering, the passenger 320 identifies himself/herself to the application 201 as blind and needing navigational and wayfinding assistance and the building owner provides layouts of each office 312 on each floor 311 as well as layouts of elevator banks 313 that serve those offices 312 and floors 311 to the application 201. In this exemplary instance, the passenger 320 can input to the application 201 his destination, which in this case, may be an apartment, office or another business location 312 on a particular floor 311 of the office building 310. The passenger 201 is thus guided with voice navigation via his/her smartphone to the office building 310 by the application 201. Once inside the office building 310, the application 201 provides additional voice navigation to the nearest elevator bank 313 whereupon the application 201 can call an elevator 314 without the need for the passenger to press a call feature and can input to the elevator system 101 of FIG. 1 a destination floor. Once the elevator 314 arrives, the application 201 can direct the passenger into and out of the elevator 314 without the need for the passenger to press a floor feature, and can direct the passenger to the destination apartment, office or other business location 312 once the elevator 314 reaches the destination floor 311.

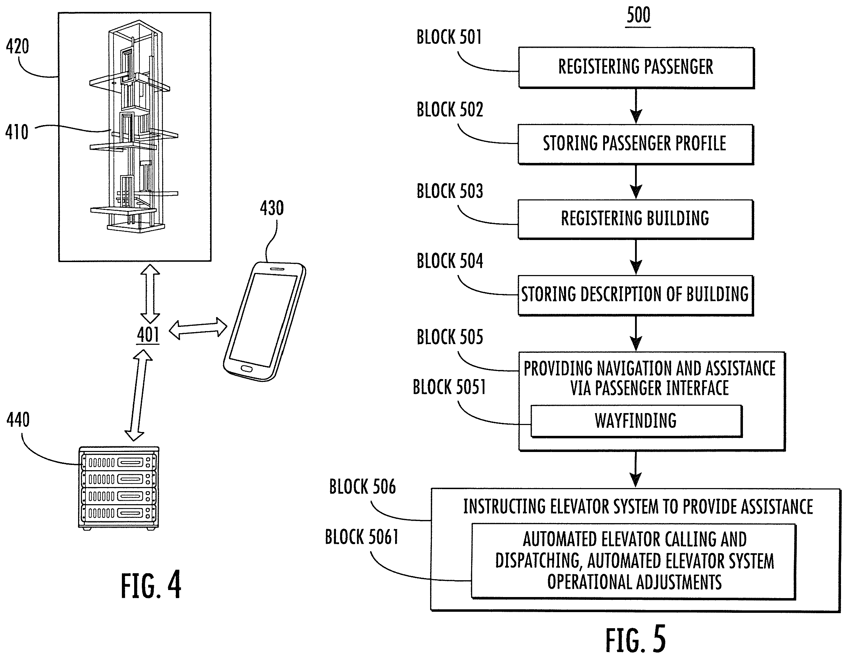

With continued reference to FIGS. 1-3 and with additional reference to FIG. 4, a control system 401 is provided and includes an elevator system 410, such as the elevator system of FIG. 1, deployed in a building 420, a passenger device 430, such as a portable computing device and/or a smartphone, and a building owner device 440, such as a portable computing device, a smartphone and/or a computer system of the building 420. A memory of the passenger device 430 has first executable instructions of an elevator control application (i.e., the application 201 of FIGS. 2A, 2B and 3) stored thereon, which, when executed, cause a processor of the passenger device 430 to register a passenger with the elevator control application, to store a passenger profile of the passenger with the elevator control application and to generate a passenger interface 431 by which the passenger can interface with the elevator control application. A memory of the building owner device 440 has second executable instructions of the elevator control application stored thereon, which, when executed, cause the processor of the building owner device 440 to register the building 420 with the elevator control application and to store a description of the building 420 with the elevator control application. In accordance with embodiments, the passenger profile can include at least disability information, preferences and various other characteristics of the passenger and the description of the building 420 can include at least available assistance information of the building 420 as well as the building address, the building name, tenant lists and other characteristics of the building 420.

In general, the passenger profile of the passenger includes a description of a type of the passenger as well as, for example, the disability information of the passenger (along with any other personal information the passenger wishes to share about his/her movement preferences, desires and/or needs and requirements) and at least one or more of role information of the passenger, passenger assistance information and passenger device information. Also, in general, the description of the building 420 includes a location of the building 420 as well as descriptions of floors and floor layouts of the building 420, the available assistance information of the building 420 and descriptions of building services.

In an exemplary case (see FIG. 3 and the accompanying text), when executed, the first executable instructions of the elevator control application cause the processor of the passenger device 430 to provide via the passenger interface 431 navigation and assistance to the passenger in travel to and through the building 420 in accordance with the passenger profile, the disability information of the passenger, the description of the building 420 and the available assistance information of the building 420 where the navigation and assistance can include, for example, at least wayfinding to and through the building 420. Further, when executed, the second executable instructions of the elevator control application cause the processor of the building owner device 440 to instruct the elevator system 410 to provide available assistance to the passenger in travel to and through the building 420 in accordance with the passenger profile, the disability information of the passenger, the description of the building 420 and the available assistance information of the building 420 where the available assistance can include, for example, at least automated elevator calling and dispatching and automated elevator system operational adjustments.

With reference to FIG. 5, a control system operational method 500 of the control system 401 of FIG. 4 is provided. As shown in FIG. 5, the control system operational method 500 includes registering a passenger with an elevator control application (block 501), storing a passenger profile of the passenger with the elevator control application (block 502), registering the building with the elevator control application (block 503), storing a description of the building with the elevator control application (block 504), providing via a passenger interface navigation and assistance to the passenger in travel to and through the building in accordance with the passenger profile and the description of the building (block 505) and instructing the elevator system to provide available assistance to the passenger in the travel to and through the building in accordance with the passenger profile and the description of the building (block 506). In accordance with embodiments, the providing via the passenger interface of the navigation and assistance of block 505 can include, for example, wayfinding to and through the building (block 5051) and the instructing of the elevator system to provide the available assistance of block 506 can include, for example, instructing the elevator system to execute automated elevator calling and dispatching and automated elevator system operational adjustments (block 5061).

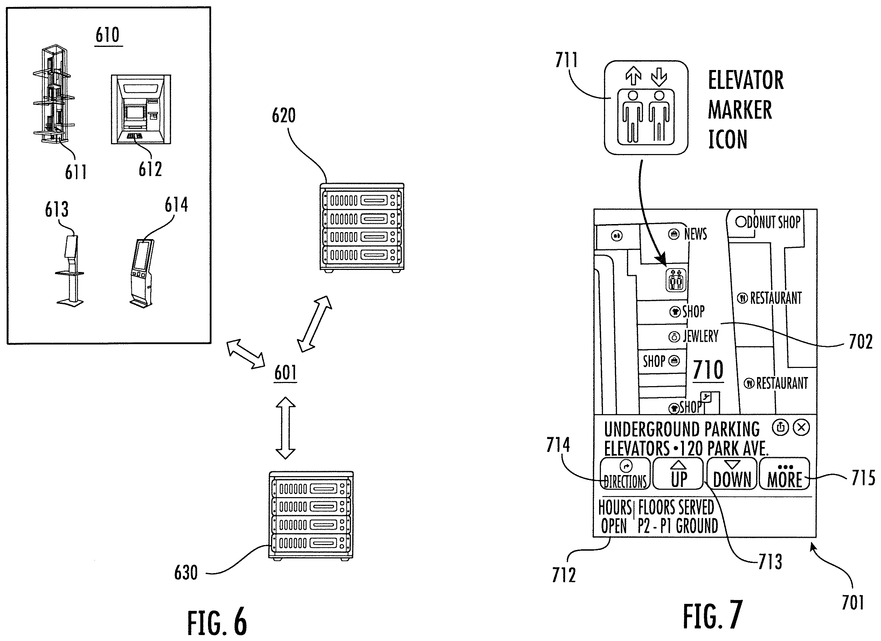

With reference to FIG. 6, a third party control system 601 is provided and includes an electromechanical system 610, a first control system 620 and a third party control system 630. In accordance with embodiments, the electromechanical system 610 can include any one or more of an elevator system (or an escalator or a moving walkway) 611, a banking kiosk 612, a shopping checkout kiosk 613 and a food ordering kiosk 614. The first control system 620 is controlled and operated by a primary operator of the electromechanical system 610 and is configured to control operations of the electromechanical system 610 in accordance with commands. The third party control system 630, upon agreement by the primary operator of the first control system 620, is configured to control a first subset of the operations of the electromechanical system 610 in accordance with a second subset of the commands.

With reference to FIG. 7, in the exemplary case in which the electromechanical system 610 includes or is provided as the elevator system 611, the electromechanical system 610 can be deployed in a building as described above with the primary operator being an owner of the building. In these or other cases, the third party 630 can be a publisher of a wayfinding application 701 and can generate, within the wayfinding application 701, a passenger interface 710 by which the first subset of the operations of the electromechanical system 610 are controllable with the second subset of the passenger commands.

As shown in FIG. 7, the passenger interface 710 can include a clickable graphical marker 711 (or any other type of interactive element) that appears on a navigation map 702 of the wayfinding application 701 and is representative of an elevator group and a position thereof. When the clickable graphical marker 711 is clicked, the passenger interface 710 provides elevator-specific details 712 including one or more of a list of floors served, an estimated time of elevator arrival, a number of elevators, elevator operational statuses, a queue length, elevator cab sizes and car speeds. Also, when the graphical marker 711 is clicked, the passenger interface 710 is usable to call an elevator and can include at least one or more of a two-feature interface 713 and a destination entry interface 714. In addition, when the graphical marker 711 is clicked and is a waypoint along a navigational pathway of the passenger, the passenger interface 711 can include at least one of a floor selection menu with an automatic elevator call and an automatic notification issuance capability 715.

In the exemplary case in which the electromechanical system 610 includes or is provided as the at least one of the banking kiosk 611, the shopping checkout kiosk 612 and the food ordering kiosk 613, the electromechanical system 610 can be deployed in a building or spatial area as described above with the primary operator being an owner of the building or the spatial area. In these or other cases, the third party 630 can again be the publisher of the wayfinding application 701 of FIG. 7 and can generate, within the wayfinding application 701, an interface by which the first subset of the operations of the electromechanical system 610 are controllable with the second subset of the passenger commands. That is, a user of the wayfinding application 701 will be able to use the wayfinding application to navigate to and control the banking kiosk 611, for example, using his/her smartphone without the need for removing a bank card or interfacing with the control features of the banking kiosk 611 itself.

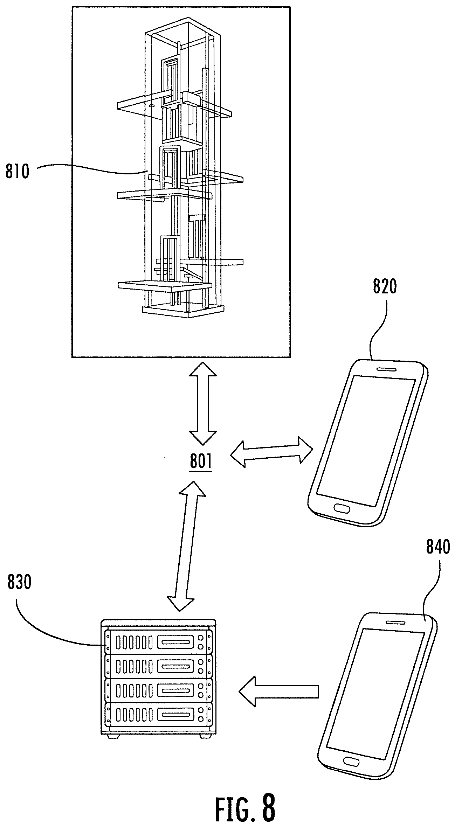

With reference to FIG. 8, a computing system 801 is provided for wayfinding and elevator system control. The computing system includes an elevator system 810 deployed in a building and being controllable by an elevator control application such as the application 201 of FIGS. 2A and 2B, a building owner device 820 configured to execute a building owner side of the elevator control application, a third party device 830 and a passenger device 840. The third party device 830 is configured to execute a publisher side of a wayfinding application such as the wayfinding application 701 of FIG. 7 and to generate, for display within the wayfinding application, a passenger interface such as the passenger interface 710 of FIG. 7 by which a passenger interfaces with a passenger side of the elevator control application. The passenger device 840 is configured to execute a passenger side of the wayfinding application with the passenger interface displayed therein for passenger interfacing with the passenger side of the elevator control application.

As above, the passenger interface can include a clickable graphical marker (or any other type of interactive element) that appears on a navigation map of the wayfinding application and is representative of an elevator group and a position thereof. When the clickable graphical marker is clicked, the passenger interface provides elevator-specific details including one or more of a list of floors served, an estimated time of elevator arrival, a number of elevators, elevator operational statuses, a queue length, elevator cab sizes and car speeds. Also, when the graphical marker is clicked, the passenger interface is usable to call an elevator and can include at least one or more of a two-feature interface and a destination entry interface. In addition, when the graphical marker is clicked and is a waypoint along a navigational pathway of the passenger, the passenger interface can include at least one of a floor selection menu with an automatic elevator call and an automatic notification issuance capability (see FIG. 7).

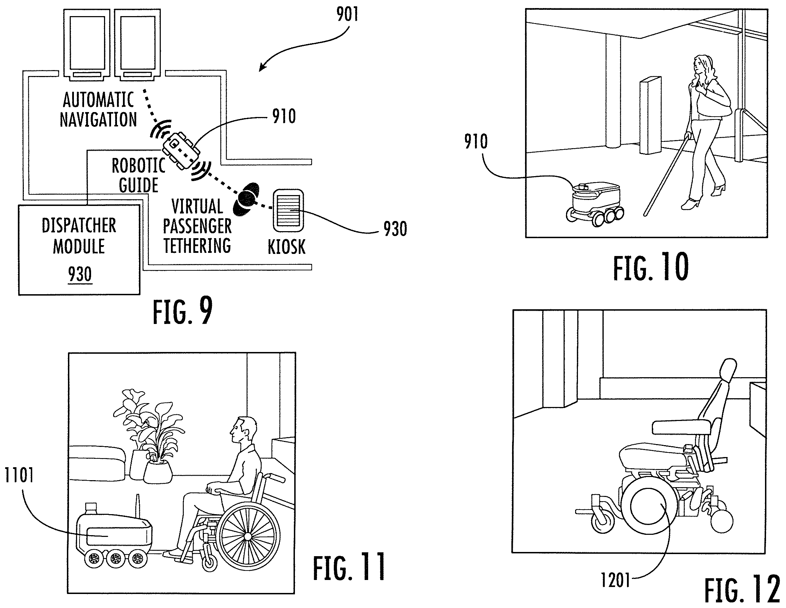

With reference to FIGS. 9 and 10, an automatic wayfinding system 901 is provided and includes a robotic guide 910 (which can be one of a plurality of robotic guides 910, each having a unique configuration), a passenger interface 920 through which a passenger provides an input of a desired destination and a dispatching module 930. Upon receipt of the input of the desired destination, the dispatching module 930 dispatches the robotic guide 910 to the passenger. In addition to providing the input of the destination, the passenger can also generate a passenger profile through the passenger interface 920, where the passenger profile can include a description of a disability of the passenger. At least one of the robotic guide 910 and the dispatching module 930 have access to a navigation map including the desired destination, a current position of the passenger and information relating to one or more paths from the current position of the passenger to the desired destination. The robotic guide 910 can be provided with a unique configuration that corresponds to the disability of the passenger and is programmed to lead the passenger along the one or more paths while remaining tethered to the passenger, in which case the dispatching module 930 selects the robotic guide 910 whose configuration corresponds to the disability (i.e., the robotic guide 910 of FIG. 9 is selected for correspondence with blindness and the robotic guides of FIGS. 11 and 12 are selected for correspondence with passengers needing mobility assistance).

In accordance with embodiments, the automatic wayfinding system 901 can be deployed in a building including an elevator system as described above and, in these or other cases, the navigation map can include information of the elevator system and the one or more paths can include elevator entrances and exits and vertical movements along elevator shafts. In any case, the robotic guide 910 can be communicative with elevators of the elevator system (i.e., to place an elevator call on behalf of the passenger) and can be communicative with the passenger and provided with storage components 911 for luggage and other baggage.

As shown in FIGS. 9 and 10, the robotic guide 910 can be virtually tethered to the passenger and can use detection technology, such as LiDAR, to detect a position of the passenger while leading the passenger along the one or more paths and can be programmed to remain close to the passenger by matching the passenger's pace. This can be particularly helpful in a case in which the passenger's disability is blindness, for example, as illustrated in FIG. 10 with the robotic guide 910 being capable of leading the passenger in close proximity to the passenger but without there being a need for the robotic guide 910 to actually be physically tethered to the passenger.

With reference to FIGS. 11 and 12, the robotic guide 910 can be physically tethered to the passenger by coupling with a wheelchair 1101 of the passenger or by being itself a standalone wheelchair 1201 for the passenger.

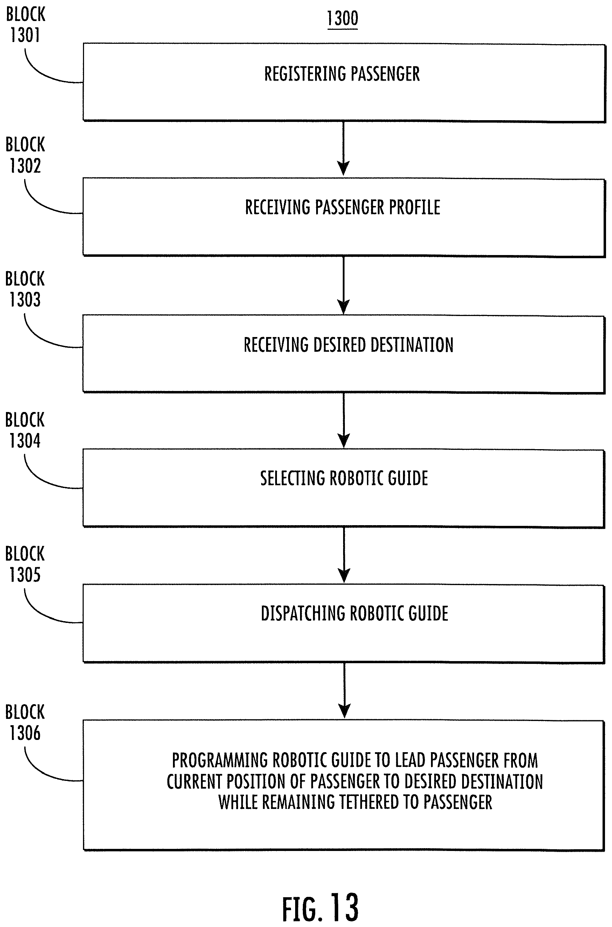

With reference to FIG. 13, an operational method 1300 of an automatic wayfinding system such as the automatic wayfinding system 901 of FIG. 1 is provided and can be deployed in a building including an elevator system as described above. The operational method 1300 includes registering a passenger (block 1301), receiving, from the passenger, a passenger profile (block 1302) and receiving, from the passenger, an input of a desired destination (block 1303). The operational method 1300 further includes selecting, from among a plurality of robotic guides, a robotic guide having a unique configuration corresponding to the passenger profile (block 1304), dispatching the robotic guide to the passenger (block 1305) and programming the robotic guide to lead the passenger from a current position of the passenger to the desired destination while remaining tethered to the passenger (block 1306).

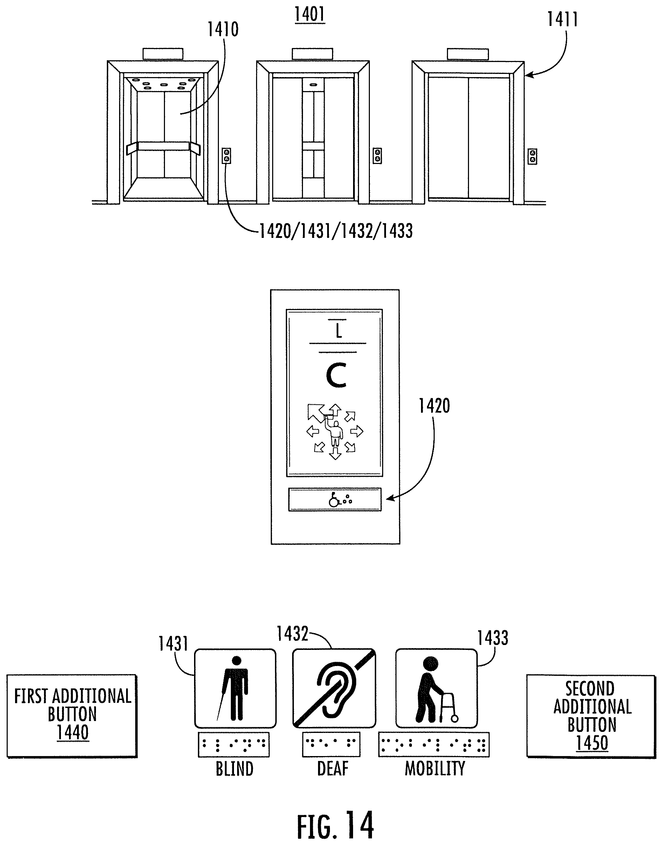

With reference to FIG. 14, a personnel movement system 1401 is provided as may be configured as an elevator system, such as the elevator system 101 of FIG. 1, or as an escalator system or as a moving walkway system. As above, the following description will relate to the case of the personnel movement system 1401 being an elevator system for purposes of clarity and brevity.

As shown in FIG. 14, the personnel movement system 1401 includes a personnel movement element, which is hereinafter referred to as an elevator car 1410 and which is one of a bank of one or more elevator cars 1411, to transport passengers from one location to another, a controller (i.e., the controller 115 of FIG. 1) that is configured to control operations of the elevator car 1401, an optional general assistance feature 1420 and one or more special assistance features including, for example, a first special assistance feature 1431, a second special assistance feature 1432 and a third special assistance feature 1433.

When included, the general assistance feature 1420 can be, but is not required to be, operably disposed at an entrance/exit of the elevator car 1410. When actuated, the general assistance feature 1410 signals to the controller to operate in a general assistance mode. In the general assistance mode, certain ones of the operations of the elevator car 1410 are adjusted. For example, the general assistance feature 1420 can be configured to simultaneously enable at least audio announcements at each floor serviced by the elevator car 1410 as a way to assist blind passengers, increased-volume chimes and announcements as a way to assist deaf passengers and extended door timings as a way to assist mobility-challenged passengers.

The one or more special assistance features can be, but are not required to be, operably disposed at the entrance/exit of the elevator car 1410. When each of the one or more special assistance features are when actuated, each of the one or more special assistance features signals to the controller to operate in one of one or more special assistance modes. In accordance with embodiments, for each of the one or more special assistance modes, one of a corresponding customizable subset of the certain ones of the operations of the personnel movement element are adjusted (i.e., customizable from passenger to passenger) and/or a customizable subset of any of the operations of the personnel movement element are adjusted.

That is, when the first special assistance feature 1431 is actuated, the first special assistance feature 1431 signals to the controller to enable only the audio announcements for assisting blind passengers, when the second special assistance feature 1432 is actuated, the second special assistance feature 1432 signals to the controller to enable only the increased-volume chimes and announcements for assisting deaf passengers and, when the third special assistance feature 1433, the third special assistance feature 1433 enables only the extended door timings for assisting mobility-challenged passengers. It is to be understood , however, that other embodiments exist such where the passenger is able to choose a specific disability requirement to be adjusted, as opposed to a "one size fits all" approach. This is the core "a la carte" feature.

Regarding the extended door timings embodiments in particular, this can be executed at the origin floor where the call is picked up (i.e., where the mobility-challenged person boards the car) but can also be executed for when a passenger deboards. In the deboarding case, if the call is a destination-entry call where the passenger's destination is entered at a kiosk before boarding the car, it is known at which floor the passenger will deboard. However, for a control interface with a separate hall call and car call (where the car call is entered after the passenger boards the car and presses the destination floor feature), the passenger may not need to press the car call feature if that call is already entered (i.e., the destination floor button's telltale light is on showing that it was already pressed) so that often we cannot anticipate where the passenger will deboard. Here, it is possible to extend the dwell time at all stops (in other words, if the call was a up call, then from the point where the call was entered, at each stop where the car has moved up from the previous stop, use the extended door dwell time until the car changes direction which inherently is after when the call was served. Additionally or alternatively, another special assistance feature can be provided inside the car which can be pressed in association with a car call. For instance, if a mobility-challenged passenger enters the car at floor 5 and wants to deboard at floor 15, he/she presses a special assistance feature to extend the door timing followed by pressing the car call feature for floor 15. Then, if the car stops along the way at floor 9, the door dwell will not be extended but when the car stops at floor 15, the car will extend its door time

In accordance with embodiments, the controller can be configured to automatically recognize a passenger by, for example, a credential of the passenger or an identification of the passenger's RFID badge or smartphone, facial recognition, etc., and to initiate one of the multiple special assistance modes, which is associated with the passenger or the passenger's credential, automatically and without the special assistance feature being actuated. That is, in an event the passenger is recognized and known to be blind by the controller, the controller can automatically enable only the audio announcements for assisting blind passengers without the passenger needing to actuate the first special assistance feature 1431 and/or to otherwise enable/disable those features that correspond to the passenger's needs, disabilities, desires, etc.

In addition, an adjustment degree of the corresponding subset of the certain ones of the operations of the personnel movement element can be configurable. That is, in an event the passenger is recognized and known to be mobility-challenged by the controller, the controller can automatically enable only the extended door timings for assisting mobility-challenged passengers without the passenger needing to actuate the third special assistance feature 1433. For example, if one user requires a 2.5 feet/s walking speed translating to a 10 second delay since the passenger is 25 feet away, and another passenger requires a 1.0 feet/s walking speed translating to 12 seconds because the passenger is 12 feet away, the extended door timings should allow 12 seconds to reach the elevator as the most stringent requirement.

In accordance with embodiments, while only one of the one or more special assistance features may be actuated for assisting one type of disabled passenger in some cases, at least two or more special assistance features can be coincidentally actuatable. For example, a blind passenger who is also mobility-challenged can actuate the first special assistance feature 1431 and the third special assistance feature 1433 at the same time to enable the audio announcements for assisting blind passengers and to enable the extended door timings for assisting mobility-challenged passengers.

In accordance with further embodiments, each elevator car of the bank of the one or more elevator cars 1411 can be made of glass or another transparent material whereas the elevator car 1410 can be non-transparent. In these or other cases, the personnel movement system 1401 can further include a first additional feature 1440. When actuated, the first additional feature 1440 (i.e., the "vertigo feature") can signal to the controller to operate in a second special assistance mode in which only the non-transparent elevator (i.e., only elevator car 1410) or only the glass enclosed elevators (for cases of claustrophobic passengers) is/are dispatched. Also or as an alternative, in accordance with further embodiments, the personnel movement system 1401 can further include a second additional feature 1450. When actuated, the second additional feature 1450 (the "autism or autism spectrum feature") can signal to the controller to operate in a third special assistance mode in which certain ones of the operations that are characterized as stimuli can be toned down so as to reduce sounds, lights, lighting intensity, or other stimuli that might upset a passenger with autism or who is on the autism spectrum.

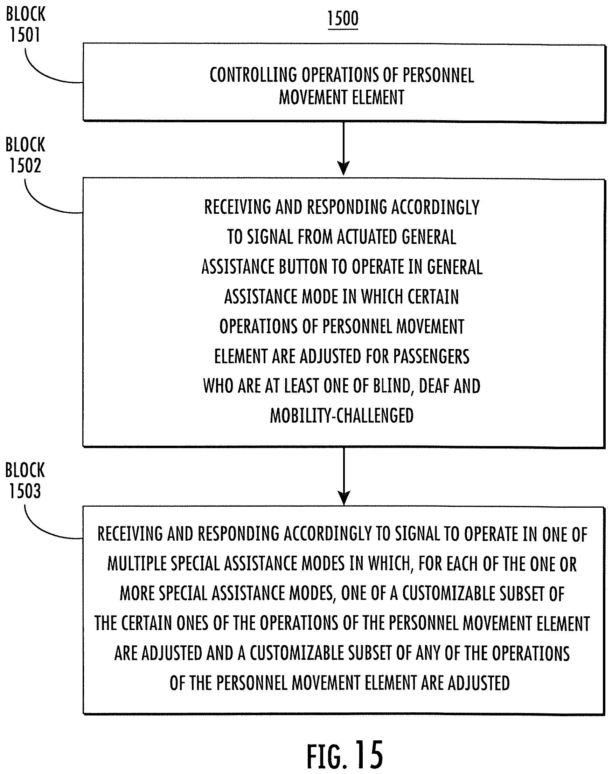

With reference to FIG. 15, an operational method 1500 of a personnel movement system, such as the personnel movement system 1401 of FIG. 14, is provided. As shown in FIG. 15, the operational method 1500 includes controlling operations of a personnel movement element (block 1501), receiving and responding accordingly to a signal from an actuated general assistance feature to operate in a general assistance mode in which certain operations of the personnel movement element are adjusted for passengers who are at least one of blind, deaf and mobility-challenged (block 1502) and receiving and responding accordingly to a signal (i.e., by actuation of one or more of the first, second and third special assistance features 1431, 1432 and 1433 and/or by recognition of the passenger) to operate in one of multiple special assistance modes in which, for each of the one or more special assistance modes, one of a customizable subset of the certain ones of the operations of the personnel movement element are adjusted and a customizable subset of any of the operations of the personnel movement element are adjusted (block 1503).

Technical effects and benefits of the present disclosure are the provision of an elevator system that accommodates disabled users to the extent required and not to assume the lowest common denominator which generally inconveniences all passengers (including the partially-disabled passenger) and reduces traffic performance.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A personnel movement system, comprising:
a personnel movement element to transport passengers from one location to another; and
a controller configured to control operations of the personnel movement element,
the controller being configured to be instructed to operate in one or more special assistance modes in which, for each of the one or more special assistance modes, a customizable subset of the operations of the personnel movement element are adjusted.

2. The personnel movement system according to claim 1, wherein:
the personnel movement element comprises an elevator car,
the elevator car is one of a bank of one or more elevators, and
the personnel movement system further comprises:
one or more special assistance features which, when actuated, signal to the controller to operate in corresponding ones of the one or more special assistance modes.

3. The personnel movement system according to claim 1 or 2, wherein the personnel movement system further comprises at least one of:
a first additional feature where the bank of the elevators comprises glass enclosed elevators and a non-transparent elevator, wherein the first additional feature, when actuated, signals to the controller to operate in a first additional special assistance mode in which only the non-transparent or only the glass enclosed elevators are dispatched; and
a second additional feature, which, when actuated, signals to the controller to operate in a second additional special assistance mode in which certain ones of the operations that are characterized as stimuli are toned down.

4. The personnel movement system according to any of claims 1 to 3, wherein the operations of the personnel movement element comprise at least one or more of audio announcements at each floor serviced by the elevator car, increased-volume chimes and announcements and extended door timings.

5. The personnel movement system according to claim 4, wherein one of the one or more special assistance features enables only the audio announcements.

6. The personnel movement system according to claim 4 or 5, wherein one of the one or more special assistance features enables only the increased-volume chimes and announcements.

7. The personnel movement system according to any of claims 4 to 6, wherein one of the one or more special assistance features enables only the extended door timings.

8. The personnel movement system according to any of claims 1 to 7, wherein the controller is further configured to automatically recognize a passenger and to initiate the one or more special assistance modes automatically.

9. The personnel movement system according to any of claims 1 to 8, wherein an adjustment degree of each operation of the customizable subset of the operations of the personnel movement element is configurable.

10. The personnel movement system according to any of claims 1 to 9, comprising:
a general assistance feature which, when actuated, signals to the controller to operate in a general assistance mode in which certain ones of the operations of the personnel movement element are adjusted; and
one or more special assistance features each of which, when actuated, signals to the controller to operate in one of one or more special assistance modes in which, for each of the one or more special assistance modes, one of:
a customizable subset of the certain ones of the operations of the personnel movement element are adjusted, and
a customizable subset of any of the operations of the personnel movement element are adjusted.

11. The personnel movement system according to claim 10, wherein the one or more special assistance features are provided as at least two or more special assistance features of which at least two or more are coincidentally actuatable to signal to the controller to operate in at least two special assistance modes.

12. The personnel movement system according to claim 10 or 11, wherein the controller is further configured to automatically recognize a passenger and to initiate one of the one or more special assistance modes, which is associated with and customized for the passenger, automatically and without the special assistance feature being actuated.

13. The personnel movement system according to any of claims 10 to 12, wherein:
an adjustment degree of each operation of the customizable subset of the certain ones of the operations of the personnel movement element is configurable, and
an adjustable degree of each operation of the customizable subset of any of the operations of the personnel movement element are adjusted.

14. An operational method of a personnel movement system, the operational method comprising:
controlling operations of a personnel movement element;
receiving and responding accordingly to a signal from an actuated general assistance feature to operate in a general assistance mode in which certain operations of the personnel movement element are adjusted for passengers who are at least one of blind, deaf and mobility-challenged; and
receiving and responding accordingly to a signal to operate in one of one or more special assistance modes in which, for each of the one or more special assistance modes, one of:
a customizable subset of the certain ones of the operations of the personnel movement element are adjusted, and
a customizable subset of any of the operations of the personnel movement element are adjusted.
